# EUROPEAN PATENT SPECIFICATION

(11) **EP 2 986 489 B1**
(45) Date of publication and mention of the grant of the patent: **31.10.2018**
(21) Application number: 14721227.8
(22) Date of filing: 14.04.2014
(51) Int. Cl.: B62H 5/00, B62J 11/00

(54) **HELMET LOCKING DEVICE**
HELMVERRIEGELUNGSVORRICHTUNG
DISPOSITIF DE VERROUILLAGE DE CASQUE

(30) Priority: 15.04.2013 GB 201306831
(43) Date of publication of application: 24.02.2016
(73) Proprietor: St-Gallay, Martin, East Molesey Surrey KT8 9LE (GB)
(72) Inventor: St-Gallay, Martin, East Molesey Surrey KT8 9LE (GB)
(74) Representative: Ellis, Michael James
(86) International application number: PCT/EP2014/057550
(87) International publication number: WO 2014/170285

(56) References cited:
- WO-A1-2012/150612
- CH-B1- 699 837
- ES-U- 1 077 844
- US-A- 3 529 451
- US-A- 4 490 997
- US-A- 4 776 188
- US-B2- 7 948 359

## Description

There is a need for improved devices, systems and methods for securely locking articles such as helmets to vehicles such as bicycles, motorcycles and scooters.

It is an object of this invention to provide a device that is efficient to manufacture and effective in securely locking an article such as a cycle helmet to a vehicle such as a bicycle.

### SUMMARY OF THE INVENTION

Accordingly, there is provided in a first aspect of the invention a device for securing a safety helmet to a vehicle such as a bicycle, the device comprising:
a base element affixed to or for affixing to the vehicle (e.g. the frame of a bicycle);
a helmet-engaging element for passing through an aperture in the helmet in order to secure it, the helmet-engaging element being attached to or mounted on the base element and being moveable between a compact stowed configuration and an extended operational configuration; and
a locking element to for receiving and locking to at least a part of the engaging element and
wherein the engaging element comprises a length of cable having a compact stowed configuration in a coil within a housing as the base element and an extended operational configuration in which an end of the cable extends from the housing and the cable is at least partially uncoiled from its stowed position..

In a second aspect of the invention, there is provided a bicycle having a frame and integrated therewith a device as defined above.

In a third aspect of the invention, there is provided a method for temporarily securing a safety helmet to a bicycle, the method comprising: providing on the bicycle a device as defined above whereby a base element is established on or fixedly mounted to a frame of the bicycle, causing a helmet-engaging element to be moved to its operational configuration, passing a first end of the helmet-support tube of the frame of a bicycle which case is configured to receive a lock head in a direction perpendicular to the saddle support tube, and an extended longitudinal rod in an L-shape having one short rod shank and one long rod shank, each end having a locking head for fitting and locking into the lock case. A bulbous joint between the short and long rod shank is provided so that when the long rod shank is passed through a ventilation hole in a helmet and its locking head secured into the lock case, the bulbous joint prevents the whole of the longitudinal rod passing through the whole and enables the helmet to be securely held onto the bicycle. In use, the long rod shank passes through the helmet and is locked into the lock case holding the helmet in the space in the main frame of the bicycle. In its rest configuration, the locking head of the short rod is locked into the lock case such that the long rod shank is stowed parallel with the support tube. This has the disadvantage that the lock is difficult to access (being between the support tube and back wheel), attaching the helmet is cumbersome and may obstruct the pedals, stores the helmet low down on the bike and requires a rigid element to be stowed which may catch on clothing etc.

CA-A-2132996 describes a helmet lock comprising a mounting plate for mounting onto a bicycle frame and having a lock for receiving a lock head, and a corresponding T-shaped rigid element with a lock head for passing through an air vent in the helmet and engaging with the lock on the mounting plate. This rigid element (of a fixed length) could be cumbersome and makes attaching the helmet fiddly.

US 4 776 188 A shows the preamble of claim 1. There remains therefore a need for a device that makes it possible for cyclists to conveniently store their helmet with the bicycle in a way that makes its theft as difficult as that of the bicycle itself (when locked or tied to a parking facility, for example).

The present inventor has devised a device that remedies the disadvantages of the prior art.

### PROBLEM TO BE SOLVED BY THE INVENTION

There is a need for improved devices, systems and methods for securely locking articles such as helmets to vehicles such as bicycles, motorcycles and scooters.

It is an object of this invention to provide a device that is efficient to manufacture and effective in securely locking an article such as a cycle helmet to a vehicle such as a bicycle.

### SUMMARY OF THE INVENTION

Accordingly, there is provided in a first aspect of the invention a device for securing a safety helmet to a vehicle such as a bicycle, the device comprising:
a base element affixed to or for affixing to the vehicle (e.g. the frame of a bicycle);
a helmet-engaging element for passing through an aperture in the helmet in order to secure it, the helmet-engaging element being attached to or mounted on the base element and being moveable between a compact stowed configuration and an extended operational configuration; and
a locking element to for receiving and locking to at least a part of the engaging element.

In a second aspect of the invention, there is provided a bicycle having a frame and integrated therewith a device as defined above.

In a third aspect of the invention, there is provided a method for temporarily securing a safety helmet to a bicycle, the method comprising: providing on the bicycle a device as defined above whereby a base element is established on or fixedly mounted to a frame of the bicycle, causing a helmet-engaging element to be moved to its operational configuration, passing a first end of the helmet-engaging element through a hole in the helmet (e.g. a ventilation hole), causing at least a portion of the engaging element to cooperate with the locking element and causing the locking element to be secured to the engaging element, whereby the safety helmet is securely locked to the bicycle.

### ADVANTAGES OF THE INVENTION

The device of the present invention may be fitted or adapted for any bicycle and enables any cycle helmet having ventilation holes to be locked to the bicycle when not in use, without the need to carry additional equipment and regardless of who is riding the bicycle or which helmet they are using. It also enables the helmet to be stored in a manner that allows it to be covered and kept away from the ground.

### BRIEF DESCRIPTION OF THE DRAWINGS

Figure 1 shows an exploded view of the various components of a device according to one embodiment of the invention showing the two incorporating parts;
Figure 2 shows a device of one embodiment of the invention in its two parts;
Figure 3 shows a device of one embodiment of the invention in full, resting assembly;
Figure 4 shows a device of Figure 3 fixed to the handlebar of a bicycle, and

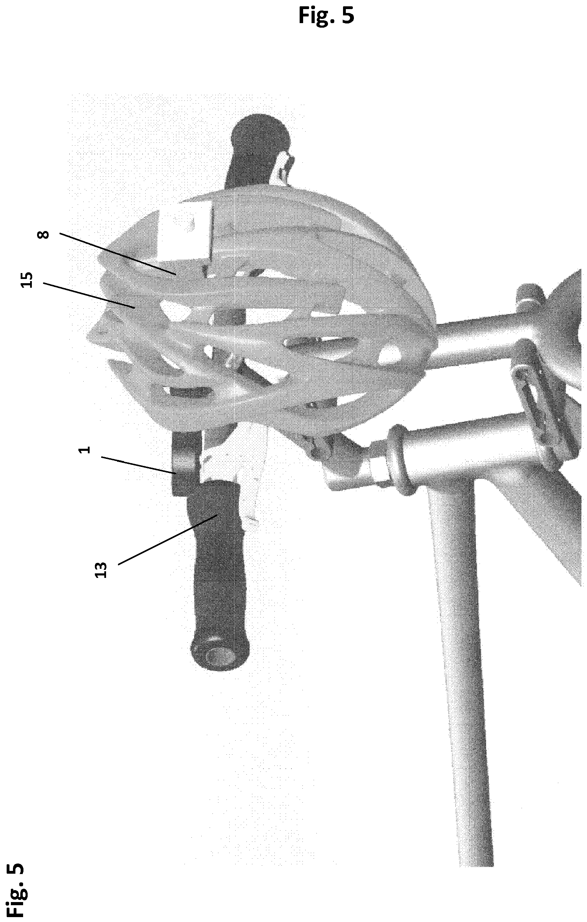

Figure 5 shows a device of Figure 4 with a helmet secured thereto.

### DETAILED DESCRIPTION OF THE INVENTION

The present invention provides a device, being means by which a safety helmet may be secured to a vehicle, especially a vehicle having handlebars such as a motorcycle, moped, motor scooter, scooter, tricycle or bicycle. More preferably, the vehicle is a pedal cycle such as a bicycle or tricycle, and most preferably a bicycle.

The description hereinafter is directed primarily to the embodiment in which the vehicle is a bicycle. It should be understood however that the features are also applicable to the generality of vehicle and other specified vehicles where the context allows.

The device comprises a base element, a helmet-engaging element attached to or mounted on the base element and a locking element (for receiving and locking to the engaging element).

The base element should be integral to or mounted/fixed or mountable/fixable (typically demountable) to the vehicle and, in the case of a bicycle preferably to the handlebars (or other part of the frame of the bicycle). Thus, the base element in the non-integral embodiment preferably comprises a fixing means for affixing the base element to the frame of a bicycle. Ideally, such a fixing should be secured with a screw fixing or locked (rather than a quick release fixing). The base element forms a housing for the helmet-engaging element.

The helmet-engaging element is for passing through an aperture in the helmet in order to secure it. The helmet-engaging element is attached to or mounted on the base element and therefore is the means by which a helmet may be held onto the bicycle (or other vehicle). The helmet-engaging means is moveable between a compact stowed configuration and an extended operational configuration.

The helmet-engaging element in its compact stowed configuration is retained within (or at least partially within) a housing provided by the base element and in its extended operational configuration extends from (or at least partially extends from) the housing.

The helmet-engaging element is extendible. The engaging element is flexible. The engaging element may be an elastic or inelastic flexible cable.

The engaging element is a length of cable having a compact stowed configuration preferably in a coil which may be held within a housing provided by the base element (e.g. on a reel rotatably mounted within the housing) and an extended operational configuration in which an end of the cable extends (to at least some extent) from the housing and the cable is at least partially uncoiled from its stowed position. Preferably, the cable is biased to its stowed position, such as by way of a spring arrangement associated with a reel for holding the coiled or wound cable within the housing.

The engaging element preferably is elongate and comprises a first end (e.g. proximal end) attached or mounted (securely) to the base element (e.g. the centre post or core of a reel holding a wound cable of the engaging element) and a second, free end typically for passing through an aperture of a helmet to engage it and to be received by a corresponding locking element. The free end of the engaging element is preferably provided with a lock engagement head, which may be in the form of a moulded, re-inforced or spliced loop to which a locking element may be secured or on which a lock head may be formed which is configured to engage with a locking element.

The locking element is preferably configured to lock to the engaging element, the lock being securely retained and/or releasable (i.e. operable) by way of a key or combination key (mechanical or electronic), key card operated electronic lock or credit card operated electronic lock, or biometric identification system. Preferably, the lock is operable by way of a key.

According to the invention the locking element is a discrete unit, by which it is meant an unattached separate unit, so that it is not attached to the base element or otherwise to the vehicle (e.g. bicycle frame) apart from to the engagement element (upon engagement and locking thereto). Alternatively, the locking element may form a part of or be attached to the vehicle (e.g. the frame of a bicycle) or the base element, especially in the embodiment of the invention in which the engagement element is flexible. According to such an embodiment, a locking element may be a part of the base element. In use according to such an embodiment, the user may draw or pull the engagement element by the free end (having a lock engaging head), pass it through an aperture in the safety helmet, then either pass it back through a second aperture or directly to the locking element portion of the base element and engage the free end into the locking element and causing the locking element to securely lock to the engaging element. Thereby, the helmet may be securely retained on the vehicle.

In the claimed embodiment, the locking element is a discrete unit. On locking with the engaging element after passing it through an aperture of a helmet, the locking element should be configured to prevent the return of the entirety of engaging element freely back through the aperture to the base element and should prevent removal of the helmet. Thus the helmet may be secured to the vehicle (e.g. bicycle). This is typically achieved by the locking element being dimensioned to prevent its passage through the aperture (or at least configured in its locked configuration to be dimensioned to prevent its passage through the aperture of the helmet engaged by the engagement element). Preferably, the locking element should have dimensions of at least 2.5 cm in three directions, preferably at least 3 cm. Optionally, the dimensions should be at least 5 cm in at least one dimension (e.g. orthogonal to the helmet-engaging element longitudinal direction at its point of contact with the locking element), and optionally in a second dimension (e.g. also orthogonal to the longitudinal direction of the helmet-engaging element) and optionally a third dimension (e.g. the longitudinal direction of the engaging element). Optionally the dimensions in one or each dimension should be up to about 10 cm, optionally up to 7.5 cm, optionally up to 6 cm.

In a particularly preferred embodiment of the invention, the device is for use with a bicycle and comprises a base element that is either integral with the handlebars of the bicycle or is mounted or mountable on the handlebars of the bicycle. The base element comprises a housing (and in the non-integral form, comprises a housing having a means for mounting the housing onto the handlebars) in which a reel is located and configured for rotation about its core. Attached to the reel (and therefore to the base element) a flexible cable for engaging with a bicycle helmet is provided (attached at a first end e.g. to the core of the reel) which cable is coiled about the reel (in the compact configuration, which it is biased to) and from which it may be extended from the housing by pulling the free end of the cable (which is provided with a locking head). The cable may be extended and passed through an aperture of a helmet and the free end of the cable (having the locking head) engaged with a locking element (e.g. by inserting a locking head into a locking aperture provided in the locking element for its receipt). The dimensions of the locking element may prevent the cable from passing back through the aperture in the helmet. The cable may partially coil back into the housing to hold the helmet to the handle bars in a secure position.

According to the invention, when the engaging element is in its stowed position, the base element and the locking element are so configured that the locking element may be stowed on the base element, e.g. by locking it over an aperture from which the engagement cable may extend.

The base element should be affixed or mounted to the frame of a bicycle, especially the handlebars, in a manner that is effectively permanent (e.g. using locking nuts or tamper-proof fixings).

Optionally, a waterproof cover (preferably a breathable waterproof cover) may be provided to fit over the helmet *in situ* locked to a bicycle (e.g. after locking the helmet to the bicycle).

According to the invention, the device further comprises a light or reflector, in which the lighting or reflecting element is a part of a discrete locking element (e.g. an end plate on the locking element) and optionally a power source for a lighting element may be included either in the locking element (e.g. batteries) or may be provided in the base element whereby appropriate electrical connection is made when the locking element is locked to the base element in its stowed configuration according to one mentioned embodiment of the invention. Optionally, the discrete locking element comprises a light or reflector on one face and a locking mechanism (e.g. key, card or biometric operative means) on another face (e.g. an adjacent face).

Preferably, according to a preferred embodiment where the helmet-engaging element is a cable, the cable may have a length of greater than 20 cm, preferably from 30 to 50 cm when fully extended (whereby it can be moved to permit easy access for the removal of the helmet and it can optionally be used to store more than one helmet or other item having an engageable aperture).

Optionally, in an embodiment of the invention in which the base element is integrated into the bicycle, the workings of the device can be hidden within the tubing of a bicycle. For example, the workings may be hidden within the handlebars such that the engagement element may extend from a pod formed on the handlebars. Alternatively, the end of a handlebar (forming for example a reflector) may double as a locking element, which may be removed to reveal the end of a cable or elongate engaging element which may be extended therefrom against a bias and engaged with a helmet by passing a free end of the engaging element through an aperture in the helmet and locked thereto by reattaching the locking element to the free end.

In another aspect, there is provided a locking device for locking an accessory having a hole for engagement to an article having a means for attachment, the locking device comprising: a base element for affixing to the article by the means for attachment; an accessory-engaging element for passing through an aperture in the accessory in order to secure it to the article, the engaging element being attached to or mounted on the base element and being moveable between a compact stowed configuration and an extended operational configuration; and a locking element to for receiving and locking to at least a part of the engaging element. Further features may be as described above for other aspects where the context allows.

The invention will now be described in more detail, without limitation, with reference to the accompanying Figures.

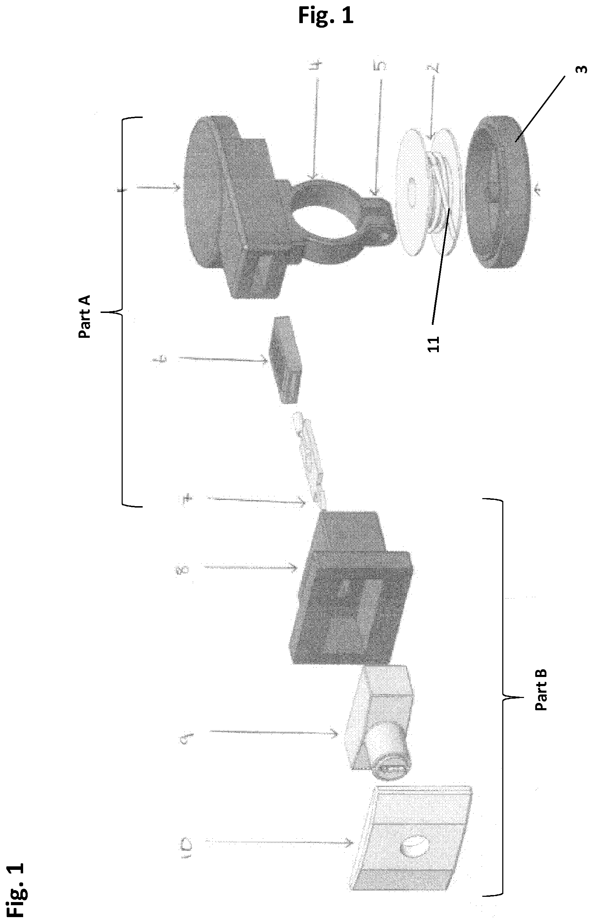

As can be seen from Figure 1, the device in one embodiment comprises two discrete elements, Part A being a base element housing and helmet-engaging cable and Part B being the discrete locking element. Part A comprises an essentially circular cable housing 1 which accommodates a cable roll (or reel) 2 and which together with a bottom part 3 and circular clamp 4 form a base element and which reel 2 carries a retractable plastic-coated cable 11 having a metal core. The cable 11, which may be similar or identical to the one used for securing the bicycle itself to a parking facility, is wound up on a spring-loaded mechanism accommodated in the bottom part 3 of the cable housing 1, so it can be pulled out from the latter and it returns to it automatically. The cable housing 1 is closed at the bottom with the aid of a bottom part 3. Part A also comprises a circular clamp 4 for fixing the cable housing 1 to the handlebar of a bicycle with the aid of a fixed (undetachable) bolt 5. These three components 1, 2, 3, 4 and 5 may form a single moulded unit, which is fixed to the handlebar by the user and which remains there for successive use.

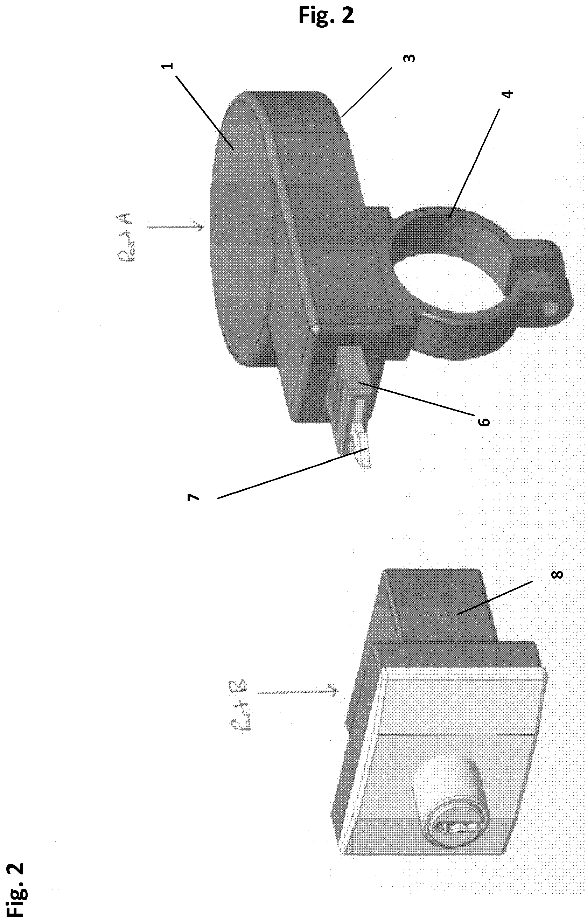

Part A also comprises (in the respective embodiments illustrated in Figures 1 and 2) a pull-tab 6 for pulling the cable out of the cable housing 1, as well as the male part 7 of the lock, which is firmly attached to the pull-tab 6. The cable dispensed from the cable housing 1 is threaded through the pull-tab 6 and is fixed to the male part 7 of the lock.

Figure 2 also shows that Part B comprises a lock holder 8 and a key-actuated female part 9 of the lock. The male part 7 of the lock is joined to the female part 9 inside the lock holder 8, and the latter is fitted with an end plate 10 to prevent the device from being dismantled by an unauthorized person. The lock that fixes the male part 7 and the female part 9 together is actuated by a key (not shown).

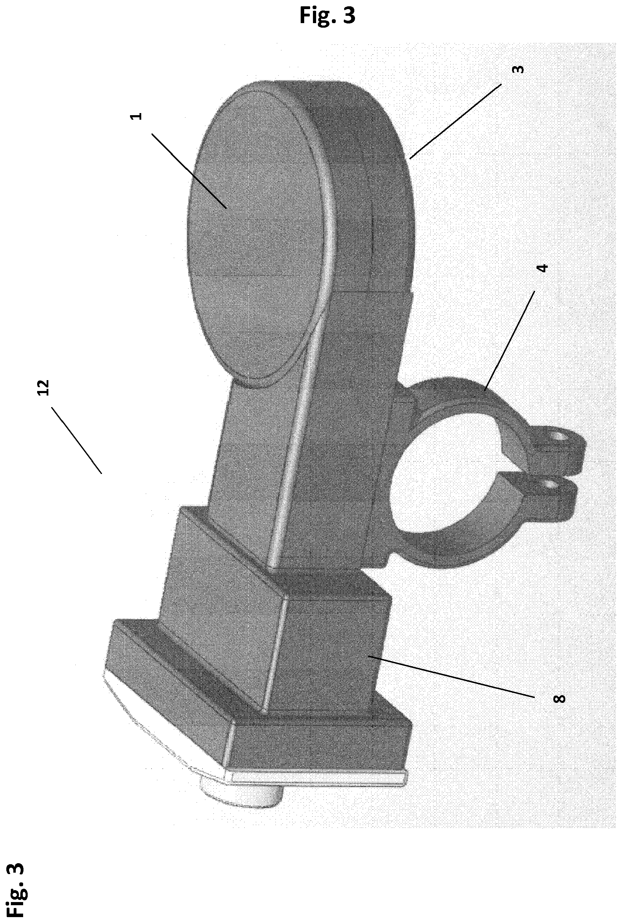

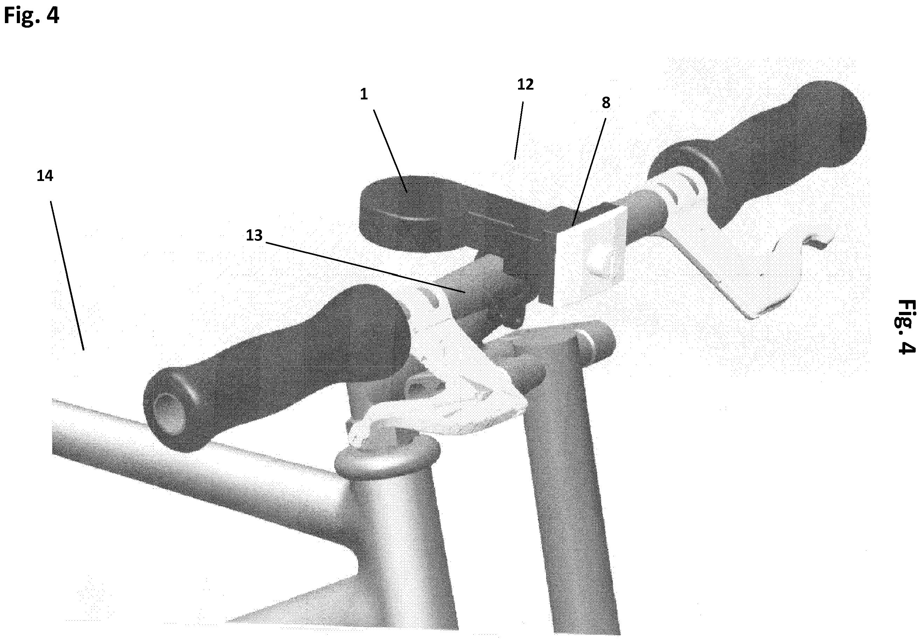

Parts A and B shown in Figure 2 are combined to form an assembly 12 shown in Figure 3, which is then fixed to the handlebar 13 of a bicycle 14 with the aid of an undetachable bolt (a one-off operation, prior to the first use). The result is shown in Figure 4.

Once the device has been fitted to the handlebar, it is used as follows in order to fix the helmet 15 to a securely parked bicycle:
- the key is turned in the lock, and part B is pulled apart from part A
- holding the pull-tab 6, the cable connected to it is threaded through one of the holes in the helmet, and the male part of the lock 7 is then re-inserted into the lock holder 8, where it engages with the female part 9 of the lock;
- the key is turned in the lock, and the bicycle is left in its parked position.

To remove the locked helmet, these steps are carried out in the reverse order.

The size and shape of the device and its components, as well as the materials used for making them can vary according to manufacturing circumstances and the size of the helmet to be locked.

The invention has been described with reference to preferred embodiments. However, it will be appreciated that variations and modifications can be effected by a person of ordinary skill in the art without departing from the scope of the invention.

## Claims

1. A device for securing a safety helmet to a vehicle such as a bicycle, the device comprising:
a base element (Part A) affixed to or for affixing to the vehicle;
a helmet-engaging element (Part A) for passing through an aperture in the safety helmet in order to secure it, the helmet-engaging element (Part A) being attached to or mounted on the base element (Part A) and being moveable between a compact stowed configuration and an extended operational configuration; and
a locking element (Part B) for receiving and locking to at least a part of the helmet-engaging element (Part A),
wherein the base element (Part A) is a housing (1) for housing the helmet-engaging element (Part A) in its compact configuration and from which the helmet-engaging element (Part A) extends in its operational configuration, and
wherein the helmet-engaging element (Part A) comprises a length of cable (11) having a compact stowed configuration in a coil (2) within the housing (1) and an extended operational configuration in which an end of the cable (11) extends from the housing (1) and the cable (11) is at least partially uncoiled from its stowed position
**characterized in that**
the locking element (Part B) is a discrete locking element separate from the base element (Part A), the locking element (Part B) being configured to receive and lock to at least a part of the helmet-engaging element (Part A), and comprising a lock (7,9) and being so configured as to prevent passage of the locking means through the aperture in the safety helmet, thereby securing the safety helmet to the vehicle, and
the device further comprises a light or reflecting element which is part of the discrete locking element.

2. A device as claimed in claim 1, wherein the base element (Part A) is integral with the vehicle.

3. A device as claimed in claim 1, wherein the base element (Part A) is securely attachable to the vehicle.

4. A device as claimed in any one of the preceding claims, wherein the helmet-engaging element (Part A) is a flexible, elasticated cable.

5. A device as claimed in any one of the preceding claims, wherein the helmet-engaging element (Part A) is elongate and is fixedly attached or mounted to the base element (Part A) at one end thereof and its other end is a free end which is provided with a lock engagement head (7) for receipt by the locking element (Part B).

6. A device as claimed in claim 1, wherein the locking element (Part B) or the base element (Part A) further comprises a power source for the light.

7. A device as claimed in any one of the preceding claims, wherein the vehicle is a bicycle.

8. A bicycle having a frame and integrated therewith a device as defined in claims 1 to 2.

9. A method for temporarily securing a safety helmet to a bicycle, the method comprising: providing on the bicycle a device as defined in any one of claims 1 to 7 whereby a base element (Part A) is established on or fixedly mounted to a frame of the bicycle, causing a helmet-engaging element (Part A) to be moved to its operational configuration, passing a first end of the helmet-engaging element (Part A) through a hole in the safety helmet, causing at least a portion of the helmet-engaging element (Part A) to cooperate with a locking element (Part B) and causing the locking element (Part B) to be secured to the helmet-engaging element (Part A), whereby the safety helmet is securely locked to the bicycle.

## Patentansprüche

1. Vorrichtung zum Befestigen eines Schutzhelms an einem Fahrzeug, wie einem Fahrrad, die Vorrichtung umfassend:
ein Grundelement (Teil A), das an dem Fahrzeug befestigt ist oder zum Befestigen am Fahrzeug dient;
ein Helmeingriffselement (Teil A) zum Durchführen einer Öffnung im Schutzhelm, um ihn zu sichern, wobei das Helmeingriffselement (Teil A) am Grundelement (Teil A) angebracht oder an diesem befestigt und beweglich zwischen einer kompakten verstauten Konfiguration und einer erweiterten Betriebskonfiguration ist; und
ein Verriegelungselement (Teil B) zur Aufnahme und Verriegelung von mindestens eines Teils des Helmeingriffselements (Teil A),
wobei das Grundelement (Teil A) ein Gehäuse (1) zur Aufnahme des Helmeingriffselements (Teil A) in seiner kompakten Konfiguration ist und von dem sich das Helmeingriffselement (Teil A) in seiner Betriebskonfiguration erstreckt, und
wobei das Helmeingriffselement (Teil A) eine Kabellänge (11) mit einer kompakten verstauten Konfiguration in einer Spule (2) innerhalb des Gehäuses (1) und eine erweiterte Betriebskonfiguration umfasst, bei der sich ein Ende des Kabels (11) aus dem Gehäuse (1) erstreckt und das Kabel (11) zumindest teilweise aus seiner verstauten Position abgerollt ist
**dadurch gekennzeichnet, dass** das Verriegelungselement (Teil B) ein separates Verriegelungselement ist, das vom Grundelement (Teil A) getrennt ist, wobei das Verriegelungselement (Teil B) konfiguriert ist, um mindestens einen Teil des Helmeingriffselements (Teil A) aufzunehmen und zu verriegeln, und eine Verriegelung (7, 9) umfasst und so konfiguriert ist, dass es den Durchgang der Verriegelungsmittel durch die Öffnung im Schutzhelm verhindert, wodurch der Schutzhelm am Fahrzeug befestigt wird, 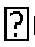 und
die Vorrichtung ferner ein Licht- oder Reflexionselement umfasst, das Teil des separaten Verriegelungselements ist.

2. Vorrichtung nach Anspruch 1, wobei das Grundelement (Teil A) mit dem Fahrzeug fest verbunden ist.

3. Vorrichtung nach Anspruch 1, wobei das Grundelement (Teil A) sicher am Fahrzeug befestigt werden kann.

4. Vorrichtung nach einem der vorstehenden Ansprüche, wobei das Helmeingriffselement (Teil A) ein flexibles, elastisches Kabel ist.

5. Vorrichtung nach einem der vorstehenden Ansprüche, wobei das Helmeingriffselement (Teil A) länglich ist und an einem Ende fest mit dem Grundelement (Teil A) verbunden oder befestigt ist und das andere Ende ein freies Ende ist, das mit einem Verriegelungseingriffskopf (7) zur Aufnahme durch das Verriegelungselement (Teil B) versehen ist.

6. Vorrichtung nach Anspruch 1, wobei das Verriegelungselement (Teil B) oder das Grundelement (Teil A) ferner eine Stromquelle für das Licht umfasst.

7. Vorrichtung nach einem der vorstehenden Ansprüche, wobei das Fahrzeug ein Fahrrad ist.

8. Fahrrad mit einem Rahmen und einer damit integrierten Vorrichtung nach den Ansprüchen 1 bis 2.

9. Verfahren zum vorübergehenden Befestigen eines Schutzhelms an einem Fahrrad, das Verfahren umfassend: Bereitstellen einer Vorrichtung am Fahrrad nach einem der Ansprüche 1 bis 7, bei der ein Grundelement (Teil A) an einem Rahmen des Fahrrads angebracht oder fest befestigt ist, wodurch ein Helmeingriffselement (Teil A) in seine Betriebskonfiguration verschoben wird, wobei ein erstes Ende des Helmeingriffselements (Teil A) durch ein Loch in dem Schutzhelm geführt wird, was dazu veranlasst, dass mindestens ein Teil des Helmeingriffselements (Teil A) mit einem Verriegelungselement (Teil B) zusammenwirkt, und das Verriegelungselement (Teil B) an dem Helmeingriffselement (Teil A) befestigt wird, wodurch der Schutzhelm sicher am Fahrrad befestigt wird.

## Revendications

1. Dispositif de fixation d'un casque de sécurité à un véhicule tel qu'un vélo, le dispositif comprenant :
un élément de base (Partie A) fixé au véhicule ou destiné à être fixé à celui-ci ;
un élément d'accouplement de casque (Partie A) destiné à traverser une ouverture dans le casque de sécurité afin de le fixer, l'élément d'accouplement de casque (Partie A) étant fixé à l'élément de base (Partie A) ou monté sur celui-ci et étant mobile entre une configuration compacte escamotée et une configuration opérationnelle étendue ; et
un élément de verrouillage (Partie B) destiné à recevoir et à verrouiller au moins une partie de l'élément d'accouplement de casque (Partie A) ;
dans lequel l'élément de base (Partie A) est un boîtier (1) destiné à loger l'élément d'accouplement de casque (Partie A) dans sa configuration compacte et à partir duquel l'élément d'accouplement de casque (Partie A) s'étend dans sa configuration opérationnelle ; et
dans lequel l'élément d'accouplement de casque (Partie A) comprend une longueur de câble (11) présentant une configuration compacte escamotée dans une bobine (2) dans le boîtier (1) et une configuration opérationnelle étendue dans laquelle une extrémité du câble (11) s'étend depuis le boîtier (1) et le câble (11) est déroulé au moins partiellement à partir de sa position escamotée ;
**caractérisé en ce que**
l'élément de verrouillage (Partie B) est un élément de verrouillage distinct séparé de l'élément de base (Partie A), l'élément de verrouillage (Partie B) étant configuré pour recevoir et verrouiller au moins une partie de l'élément d'accouplement de casque (Partie A), et comprenant un verrou (7, 9) et étant configuré de manière à empêcher le passage du moyen de verrouillage à travers l'ouverture dans le casque de sécurité, fixant ainsi le casque de sécurité au véhicule, et
le dispositif comprend en outre une lumière ou un élément réfléchissant qui fait partie de l'élément de verrouillage distinct.

2. Dispositif selon la revendication 1, dans lequel l'élément de base (Partie A) est solidaire du véhicule.

3. Dispositif selon la revendication 1, dans lequel l'élément de base (Partie A) peut être fixé de manière sûre au véhicule.

4. Dispositif selon l'une quelconque des revendications précédentes, dans lequel l'élément d'accouplement de casque (Partie A) est un câble élastique souple.

5. Dispositif selon l'une quelconque des revendications précédentes, dans lequel l'élément d'accouplement de casque (Partie A) est allongé et est attaché de manière fixe ou monté sur l'élément de base (Partie A) à l'une de ses extrémités, et son autre extrémité est une extrémité libre qui est pourvue d'une tête d'accouplement de verrouillage (7) destinée à être reçue par l'élément de verrouillage (Partie B).

6. Dispositif selon la revendication 1, dans lequel l'élément de verrouillage (Partie B) ou l'élément de base (Partie A) comprend en outre une source d'énergie pour la lumière.

7. Dispositif selon l'une quelconque des revendications précédentes, dans lequel le véhicule est un vélo.

8. Vélo ayant un cadre et intégré à celui-ci un dispositif tel que défini dans les revendications 1 à 2.

9. Procédé pour fixer temporairement un casque de sécurité à un vélo, le procédé comprenant : la fourniture sur le vélo d'un dispositif tel que défini dans l'une quelconque des revendications 1 à 7 de sorte qu'un élément de base (Partie A) est installé sur un cadre du vélo ou monté à demeure sur celui-ci, entraînant le déplacement d'un élément d'accouplement de casque (Partie A) dans sa configuration opérationnelle, en faisant passer une première extrémité de l'élément d'accouplement de casque (Partie A) à travers un trou dans le casque de sécurité, amenant au moins une partie de l'élément d'accouplement de casque (Partie A) à coopérer avec un élément de verrouillage (Partie B) et causant la fixation de l'élément de verrouillage (Partie B) à l'élément d'accouplement de casque (Partie A), de sorte qu'ainsi le casque de sécurité est verrouillé de manière sûre sur le vélo.
